## Europäisches Patentamt
## European Patent Office
## Office européen des brevets

(11) Veröffentlichungsnummer: **0 260 334**
**B1**

(12) **EUROPÄISCHE PATENTSCHRIFT**

(45) Veröffentlichungstag der Patentschrift:
29.11.89

(51) Int. Cl.⁴: **A01D 41/12**, A01F 12/60

(21) Anmeldenummer: 86112745.4

(22) Anmeldetag: 16.09.86

(54) Entleerungsvorrichtung.

(43) Veröffentlichungstag der Anmeldung:
23.03.88 Patentblatt 88/12

(45) Bekanntmachung des Hinweises auf die Patenterteilung:
29.11.89 Patentblatt 89/48

(84) Benannte Vertragsstaaten:
DE FR GB IT

(56) Entgegenhaltungen:
DE-B- 1 167 091
DE-B- 1 198 109
DE-B- 1 255 378
DE-B- 1 457 938
DE-C- 960 683
US-A- 1 615 334

(73) Patentinhaber: DEERE & COMPANY, 1 John Deere Road,
Moline Illinois 61265(US)

(72) Erfinder: Schuhmacher, Ernst, Dipl.-Ing.,
Donaustrasse 4, D-6650 Homburg-Einöd(DE)

(74) Vertreter: Feldmann, Bernhard et al, DEERE &
COMPANY European Office, Patent Department
Steubenstrasse 36-42 Postfach 503,
D-6800 Mannheim 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein an einen Sammelbehälter einer Erntebergungsmaschine angeschlossenes Entleerungsrohr, das zwischen seiner Anschlußstelle am Sammelbehälter und einer Auslaßöffnung an seinem Ende mindestens eine zweite Auslaßöffnung aufweist und über einen Schwenkteil verschließbar ist, der in der die zweite Auslaßöffnung verschließenden Stellung das Entleerungsrohr zu einem glatten oder etwa glatten Rohr vervollständigt.

Es ist allgemein eine Steuerklappe in einer Spreuleitung eines Mähdreschers bekannt, die von der äußeren Hälfte eines Rohrknies einer Spreuleitung wegklappbar ist (DE-C 960 683). Das Rohrknie ist so ausgebildet, daß die äußere Hälfte des Rohrknies im geöffneten Zustand einen in der Bahn der Spreu liegenden und diese zur Erde ablenkenden Führungsbogen bildet, so daß bei Betätigung der äußeren Hälfte des Rohrknies eine nach unten führende Öffnung freigegeben wird. Hierdurch können die im Rohrknie auftretenden Verstopfungen beseitigt werden.

Ferner ist eine Körnerabsackvorrichtung an Mähdreschern bekannt (DE-C 1 255 378), die aus einem Körnerauslaufrohr besteht, das am oberen Ende des Entleerungsrohres des Mähdreschers schwenkbar angeschossen ist. Das Auslaufrohr dient zum Befüllen eines Körnersackes, der am unteren Ende des Körnerauslaufrohres angeschlossen wird. Füllt sich der Sack mit Erntegut, so wird infolge des zunehmenden Gewichtes das Körnerauslaufrohr verschwenkt und in eine Stellung gebracht, in der automatisch die im Entleerungsrohr vorgesehene Förderschnecke übere eine Schaltvorrichtung abgeschaltet wird.

Ferner ist ein Entleerungsrohr der eingangs aufgeführten Art bekannt (DE-B 1 457 938), das eine verschwenkbare Absackvorrichtung mit zwei Auslaßöffnungen aufnimmt. Soll die Absackvorrichtung nicht verwendet werden, so läßt sich diese aus einer Entleerungsstellung in eine obere Stellung verschwenken, in der die zweite Auslaßöffnung im Entleerungsrohr über einen Bodenteil der Absackvorrichtung verschlossen ist und in der über die Auslaßöffnungen der Absackvorrichtung kein Erntegut mehr abgegeben werden kann.

Demgegenüber liegt der Erfindung die Aufgabe zugrunde, das bekannte Entleerungsrohr derart auszubilden, daß Ladefahrzeuge unterschiedlicher Höhe ohne Erntegutverluste in kürzester Zeit befüllt werden können.

Diese Aufgabe ist dadurch gelöst, daß der Schwenkteil als Austragsrinne ausgebildet und aus seiner die zweite Auslaßöffnung verschließenden Stellung um eine im wesentlichen waagerechte Achse nach unten klappbar ist. Durch die Verwendung einer Austragsrinne unterhalb einer Auslaßöffnung im Entleerungsrohr vor der eigentlichen Auslaßöffnung am äußeren Ende des Entleerungsrohres läßt sich auf einfache Weise ein Ladefahrzeug verlustfrei mit Erntegut befüllen, auch wenn die Oberkante der Seitenwände des Ladefahrzeuges einen relativ großen Abstand zur Auslaßöffnung am Austragende des Entleerungsrohres aufweist. Durch die Austragsrinne, die beispielsweise im mittleren Bereich des Entleerungsrohres vorgesehen sein kann, ist eine einwandfreie Anpassung der Austragsrinne an die Höhe des Ladefahrzeuges ohne weiteres möglich, ohne daß hierzu das gesamte Entleerungsrohr in seiner Lage verändert zu werden braucht, wobei bei Bedarf mit sich verschwenkter Austragsrinne selbstverständlich auch über die Auslaßöffnung am Ende des Entleerungsrohres Erntegut abgegeben werden kann. Eine derartige Austragsrinne läßt sich auch an herkömmlichen Entleerungsrohren ohne großen Aufwand anbauen. Um eine Verschwenkung der Austragsrinne am Entleerungsrohr vornehmen zu können, kann diese mittels mindestens eines Gelenkbolzens an der Wand des Entleerungsrohres verschwenkbar angeschlossen sein. Dabei kann die Austragsrinne auch mittels eines Hydromotors verschwenkt werden, der über eine entsprechende Bedienungseinrichtung vom Fahrerstand der Erntebergungsmaschine steuerbar ist.

Um Austragverluste des Erntegutes aus der zweiten Auslaßöffnung des Entleerungsrohres zu vermeiden, ist es vorteilhaft, daß in der abgesenkten Stellung der Austragsrinne die Seitenwände der Austragsrinne so weit hochgezogen sind, daß sie zumindest an die Außenseite des Entleerungsrohres reichen. Hierdurch erhält man in der abgesenkten Stellung der Austragsrinne eine relativ große Mulde, über die das Erntegut zu einem Ladefahrzeug geleitet werden kann. Der sich an die Austragsrinne anschließende Wandteil ist so ausgebildet, daß der zwischen der Oberkante der Austragsrinne und der Unterkante der Auslaßöffnung des Entleerungsrohres gebildete Zwischenraum durch den Wandteil abgedeckt wird, der beispielsweise fächerartig ausgebildet sein kann und sich ineinanderschieben läßt, je nachdem welche Stellung die Austragsrinne eingenommen hat. In vorteilhafter Weise kann anstelle der fächerartig ausgebildeten Wand auch ein zusammenlegbares Tuch zwischen der Oberkante der Austragsrinne und der Unterkante der Auslaßöffnung vorgesehen sein, das verhindert, daß Erntegut aus der Austragsrinne seitlich herausbewegt wird.

Die Austragsrinne kann in vorteilhafter Weise auch aus mindestens zwei Austragsrinnesegmenten gebildet sein, die über Gelenke miteinander verbunden sind. Die beiden Austragsrinnesegmente lassen sich ebenfalls zwischen einer Schließstellung und einer Abgabestellung über einen Hydraulikzylinder gemeinsam verschwenken. Darüber hinaus ist es möglich, das äußere Austragsrinnesegment ebenfalls mit einem Hydromotor bzw. einem Hydraulikzylinder auszurüsten, der an das erste Austragsrinnesegment anschließbar ist. Durch die Verstellung des zweiten Hydromotors läßt sich das stromabwärts liegende Austragsrinnesegment gegenüber dem stromaufwärts liegenden Austragsrinnesegment zusätzlich verstellen, um somit eine einwandfreie Anpassung des äußeren Endes der Austragsrinne an das zu befüllende Ladefahrzeug zu erhalten. Durch die Verwendung dieser Austragsrinne läßt sich auf einfache Weise die Entleerhöhe des Entleerungsrohres variieren, ohne das gesamte Entleerungsrohr zu verschwenken. Anstelle des Hydromotors können auch andere Stellsegmente zur Verstellung der Austragsrinne vorgesehen werden. Beispielsweise ist es auch möglich, Seilzugverbindungen bzw. Gestänge derart anzuschließen, daß eine Verstellung der Austragsrinne vom Fahrerstand der Erntebergungsmaschine möglich ist. Die Steuerung der Hydraulikzylinder kann darüber hinaus so vorgenommen werden, daß zuerst das äußere bzw. stromabwärts liegende Austragsrinnesegment und dann das obere bzw. stromaufwärts liegende Austragsrinnesegment verstellt wird. Je nach Arbeitseinsatz ist es auch möglich, über die Steuervorrichtung beide Austragsrinnesegmente gemeinsam zu verstellen.

Im folgenden wird die Erfindung anhand von mehrere Ausführungswege darstellenden Zeichnungen näher erläutert.

Es zeigt:

Fig. 1 eine Vorderansicht des Mähdreschers mit einem Sammelbehälter und einem an diesen angeschlossenen Entleerungsrohr sowie der erfindungsgemäßen Austragsrinne.

Fig. 2 und 3 zwei weitere Ausführungsbeispiele der Austragsrinne des Entleerungsrohres,

Fig. 4 eine Vorderansicht des Entleerungsrohres gemäß Fig. 2.

In der Zeichnung ist mit 10 ein Mähdrescher bezeichnet, der mit einer Erntebergungsvorrichtung 12, einer Fahrerkabine 14 und einem Sammelbehälter 16 ausgerüstet ist.

An der Außenseite des Sammelbehälters 16 befindet sich ein Entleerungsrohr 18, das beispielsweise mittels eines in der Zeichnung nicht dargestellten Drehflansches an das Auslaufrohrende der Entleerungsvorrichtung des Sammelbehälters 16 schwenkbar angeschlossen ist. Das Entleerungsrohr 18 ist mit Bezug auf die Standfläche des Mähdreschers 10 geneigt verlaufend angeordnet, so daß unterhalb des Entleerungsrohres ein Ladefahrzeug 20 Platz nehmen kann. In dem Entleerungsrohr 18 befindet sich eine Entleerungsschnecke 22, über die das Erntegut aus dem Sammelbehälter 16 zu einem eine Auslaßöffnung 24 aufweisenden Auslaßstutzen 25 geleitet wird. Über den Auslaßstutzen 25 gelangt das Erntegut in das Ladefahrzeug 20.

Ist das Ladefahrzeug 20 beispielsweise sehr niedrig und weist die Oberkante 26 des Ladefahrzeuges einen relativ großen Abstand zum Auslaßstutzen 25 des Entleerungsrohres 18 auf, so besteht die Gefahr, daß Erntegut insbesondere bei starkem Wind seitlich am Ladefahrzeug 20 vorbeifällt. Ein Absenken des gesamten Entleerungsrohres 18 durch Drehen um den Anschlußflansch am Sammelbehälter ist nur dann möglich, wenn die Antriebsverbindung zwischen der Entleerungsschnecke 22 und der im Sammelbehälter 16 vorgesehenen Entleerungsschnecke derart ausgebildet ist, daß ein Antrieb der Entleerungsschnecke 22 auch in einer anderen Höhenlage des Entleerungsrohres 18 ermöglicht ist. Eine derartige Antriebsverbindung zwischen den Entleerungsschnecken ist jedoch sehr aufwendig.

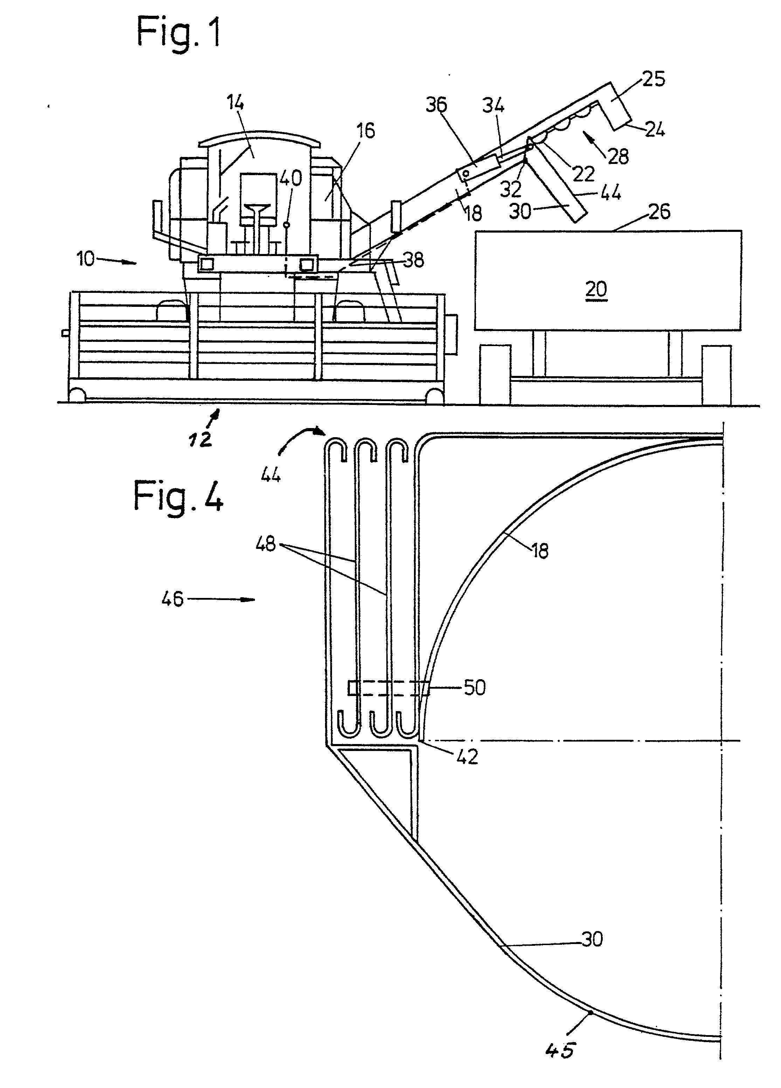

Um jedoch auch ein niedriges Ladefahrzeug 20 gemäß Fig. 1 mit Erntegut verlustfrei zu beladen, ist in vorteilhafter Weise zwischen der Anschlußstelle des Entleerungsrohres 18 am Sammelbehälter 16 und der Auslaßöffnung 24 des Entleerungsrohres eine weitere Auslaßöffnung 28 vorgesehen, die durch Herausschneiden der unteren Gehäusehälfte des Entleerungsrohres 18 gebildet ist. Der aus dem Entleerungsrohr 18 herausgeschnittene Teil ist als Austragsrinne 30 ausgebildet, die, wie aus Fig. 4 hervorgeht, aus einem im Querschnitt halbkreisförmigen Wandteil gebildet ist. Die Austragsrinne ist zwischen einer Abgabestellung gemäß Fig. 1 und einer Schließstellung verstellbar, in der die Auslaßöffnung 28 mittels der Austragsrinne vollständig abgedeckt ist, so daß das Erntegut über die Austragsrinne zur Auslaßöffnung 24 des Entleerungsrohres 18 geleitet wird.

Die Austragsrinne 30 ist mittels eines Gelenkbolzens 32 an den unteren Teil der Wand des Entleerungsrohres 18 schwenkbar angeschlossen.

Zur Verstellung der Austragsrinne 30 kann ein in der Zeichnung nicht dargestelltes mechanisches Gestänge vorgesehen sein, das einenends an das Entleerungsrohr 18 und anderenends an die Austragsrinne angeschlossen ist und das über einen entsprechenden Hebelarm bzw. einen Seilzug von der Fahrerkabine 14 aus bedienbar ist, um die Austragsrinne 30 in die gewünschte Stellung zu verschwenken.

Im Ausführungsbeispiel ist jedoch an das stromaufwärts liegende Ende des Entleerungsrohres 18 ein Hydromotor bzw. eine Kolbenstange 34 eines Hydraulikzylinders 36 angeschlossen, der mit seinem zylinderseitigen Ende mit dem Entleerungsrohr 18 gelenkig verbunden ist. Durch Einfahren der Kolbenstange 34 des Hydraulikzylinders 36 wird die Austragsrinne 30 aus der Stellung gemäß Fig. 1 in eine die Auslaßöffnung 28 verschließende Stellung verschwenkt und in dieser Stellung gehalten. Die Austragsrinne 30 kann zusätzlich über eine in der Zeichnung nicht dargestellte Verriegelungsvorrichtung gesichert werden, die hierzu im Bereich des Abgabeendes der Austragsrinne 30 vorgesehen ist und mit einem entsprechenden am Entleerungsrohr 18 vorgesehenen Gegenstück zusammenwirkt.

Der Hydraulikzylinder 36 ist über Hydraulikleitungen 38 mit einer in der Fahrerkabine 14 vorgesehenen Bedienungseinrichtung 40 verbunden, so daß der Hydraulikzylinder 36 von der Fahrerkabine 14 aus gesteuert und die Austragsrinne 30 in die gewünschte Position verschwenkt werden kann. Die Austragsrinne 30 läßt sich in jeder gewünschten Stellung mittels des Hydraulikzylinders 36 feststellen, so daß diese genau auf die Höhe des Ladefahrzeuges 20 eingestellt werden kann.

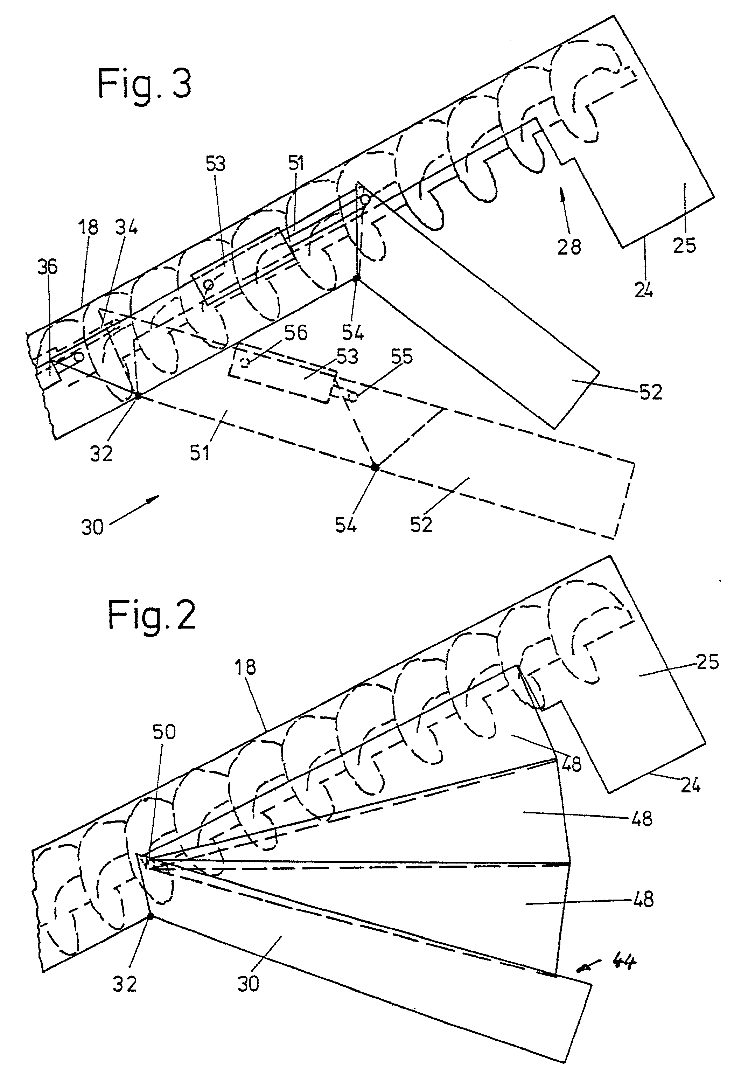

Wie aus Fig. 2 und 4 hervorgeht, besteht zwischen einer Kante 42, die die Auslaßöffnung 28 begrenzt, und einer Kante 44 der Austragsrinne 30 im abgesenkten Zustand der Austragsrinne gemäß Fig. 2 ein großer Zwischenraum, so daß das Erntegut mittels der Entleerungsschnecke 22 über die Kante 44 bewegt werden kann, wenn in diesem Bereich keine Abdeckvorrichtung vorgesehen ist. Hierzu können beispielsweise die gegenüberliegenden Wandteile der Austragsrinne 30 so weit nach oben verlängert werden, daß sie an den Wandteil des Entleerungsrohres 18 auch in der abgesenkten Stellung gemäß Fig. 1 heranreichen. Hierdurch wird verhindert, daß das Erntegut über die Kante 44 der Austragsrinne 30 herausbewegt wird und dann neben das Ladefahrzeug 20 auf den Boden fällt.

Im Ausführungsbeispiel gemäß Fig. 2 und 4 ist jedoch zwischen der Kante 42 und 44 ein in seiner Breite veränderbarer Wandteil 46 vorgesehen, der aus mehreren fächerartig angeordneten Paneelen 48 besteht, die gemeinsam über einen Gelenkbolzen 50 mit der Austragsrinne 30 gelenkig verbunden sind. Die einzelnen Paneele 48 verlaufen parallel zueinander und sind über in der Zeichnung nicht dargestellte Führungselemente derart geführt, daß sie durch Verstellen der Austragsgrinne 30 ineinandergeschoben bzw. auseinandergezogen werden und dann im letzteren Fall den Zwischenraum zwischen den Kanten 42 und 44 beiderseits des Entleerungsrohres 18 und der Austragsrinne 30 abdecken. Anstelle des Wandteiles 46 kann zwischen den Kanten 42 und 44 ein zusammenlegbares Tuch vorgesehen sein, das die gleiche Funktion wie die fächerartig angeordneten Paneele 48 erfüllt.

Nach einem weiteren Ausführungsbeispiel (Fig. 3) ist die Austragsrinne 30 aus zwei beweglich miteinander verbundenen Austragsrinnesegmenten 51 und 52 gebildet, wobei das Austragsrinnesegment 51 über den Gelenkbolzen 32 an das Entleerungsrohr 18 und das Austragsrinnesegment 52 über einen Gelenkbolzen 54 an das Austragsrinnesegment 51 schwenkbar angeschlossen ist. Die beiden Austragsrinnesegmente können über den Hydraulikzylinder 36 gemeinsam verschwenkt werden, der hierzu mittels seiner Kolbenstange 34 an das Austragsrinnesegment 51 und mit seinem zylinderseitigen Ende an das Entleerungsrohr 18 angeschlossen ist. Ferner ist zwischen den beiden Austragsrinnesegmenten 51 und 52 ein weiterer Hydraulikzylinder 53 vorgesehen, der einenends über einen Gelenkbolzen 55 mit dem Austragsrinnesegment 52 und anderenends über einen Gelenkbolzen 56 mit dem Austragsrinnesegment 51 gelenkig verbunden ist. Der Hydraulikzylinder 53 dient zur Verschwenkung des Austragsrinnesegmentes 52 gegenüber dem Austragsrinnesegment 51 (siehe die in Fig. 3 in ausgezogenen Linien dargestellte Stellung der Austragsrinnesegmente 51, 52). Die beiden Hydraulikzylinder 36 und 53 können so gesteuert werden, daß zuerst das Austragsrinnesegment 52 abgesenkt wird und dann das Austragsrinnesegment 51, wobei diese dann in der Endlagestellung eine Stellung gemäß Fig. 3 (siehe gestrichelte Darstellung) einnehmen.

Die Austragsrinne 30 wird in vorteilhafter Weise so abgesenkt, daß die Längsmittelachse der Austragsrinne mit der Standfäche einen Winkel von ca. 35° einnimmt. Auf diese Weise wird sichergestellt, daß die Körner bzw. das Erntegut ohne zusätzliche Fördermittel auf der Austragsrinne 30 nach unten in das Ladefahrzeug 20 gleiten können.

Die Hydraulikzylinder 36 bzw. 53 oder die in der Zeichnung nicht dargestellten Gestänge können so über eine Stellvorrichtung gesteuert werden, daß beim Einschwenken des Entleerungsrohres 18 in eine Transportstellung die Austragsrinne automatisch an das Entleerungsrohr 18 herangeschwenkt wird, um somit eine Kollision mit Teilen des Mähdreschers zu vermeiden.

**Patentansprüche**

1. An einen Sammelbehälter (16) einer Erntebergungsmaschine angeschlossenes Entleerungsrohr (18), das zwischen seiner Anschlußstelle am Sammelbehälter (16) und einer Auslaßöffnung (24) an seinem Ende mindestens eine zweite Auslaßöffnung (28) aufweist und über einen Schwenkteil verschließbar ist, der in der die zweite Auslaßöffnung (28) verschließenden Stellung das Entleerungsrohr zu einem glatten oder etwa glatten Rohr vervollständigt, dadurch gekennzeichnet, daß der Schwenkteil als Austragsrinne (30) ausgebildet und aus seiner die zweite Auslaßöffnung (28) verschließenden Stellung um eine im wesentlichen waagerechte Achse nach unten klappbar ist.

2. Entleerungsrohr nach Anspruch 1, dadurch gekennzeichnet, daß die Austragsrinne (30) mittels mindestens eines Gelenkbolzens (32) an der Wand des Entleerungsrohres (18) verschwenkbar gelagert ist.

3. Entleerungsrohr nach Anspruch 1 oder 2, dadurch gekennzeichnet, daß die Austragsrinne (30) mittels mindestens eines Hydromotors (36) verschwenkbar ist, der einenends an die Austragsrinne (30) und anderenends an das Entleerungsrohr (18) oder an die Erntebergungsmaschine gelenkig angeschlossen ist.

4. Entleerungsrohr nach einem oder mehreren der vorherigen Ansprüche, dadurch gekennzeichnet, daß die Austragsrinne (30) aus einem im Querschnitt halbkreisförmigen Wandteil (45) gebildet ist, der über einen in seiner Länge bzw. Breite veränderbaren Wandteil (46) mit der Wand des Entleerungsrohres (18) verbunden ist.

5. Entleerungsrohr nach Anspruch 4, dadurch gekennzeichnet, daß der Wandteil (45) der Austragsrinne (30) derart verbreiterbar ist, daß im abgesenkten Zustand der Austragsrinne (30) der Wandteil an die Wand des Entleerungsrohres (18) heranreicht.

6. Entleerungsrohr nach Anspruch 4, dadurch gekennzeichnet, daß der veränderbare Wandteil (46) aus mehreren parallel zueinander verlaufenden, fächerartig angeordneten Paneelen (48) besteht, die einenends über einen Gelenkbolzen (50) mit dem Entleerungsrohr (18) verstellbar verbunden sind.

7. Entleerungsrohr nach Anspruch 4, dadurch gekennzeichnet, daß der Wandteil (46) zwischen dem Entleerungsrohr (18) und der verschwenkbaren Austragsrinne (30) aus einem zusammenlegbaren Tuch gebildet ist.

8. Entleerungsrohr nach einem oder mehreren der vorherigen Ansprüche, dadurch gekennzeichnet, daß die Austragsrinne (30) aus mindestens zwei beweglich miteinander verbundenen Austragsrinnesegmenten (51, 52) gebildet ist, die über einen ersten Hydromotor (36) gemeinsam verschwenkbar sind, wobei ein zweiter Hydromotor (53) an die beiden Austragsrinnesegmente (51, 52) angeschlossen ist, der das äußere bzw. zweite am Austragende des ersten Austragsrinnesegmentes (51) angeordnete Austragsrinnesegment (52) gegenüber dem ersten ebenfalls verstellbaren Austragsrinnesegment (51) zusätzlich verstellt.

**Revendications**

1. Tube de vidage (18) raccordé à un réservoir collecteur (16) d'une machine de récolte, qui comporte, entre son point de raccordement au réservoir collecteur (16) et une ouverture de sortie (24) située à son extrémité, au moins une seconde ouverture de sortie (28) et peut être obturé au moyen d'un élément pivotant qui, dans la position fermant la seconde ouverture de sortie (28), complète le tube de vidage en un tube lisse ou sensiblement lisse, caractérisé en ce que l'élément pivotant est réalisé sous forme d'une gouttière de décharge (30) et peut être rabattu vers le bas, à partir de sa position fermant la seconde ouverture de sortie (28), autour d'un axe sensiblement horizontal.

2. Tube de vidage selon la revendication 1, caractérisé en ce que la gouttière de décharge (30) est placée de façon à pouvoir pivoter au moyen d'au moins un axe d'articulation (32) sur la paroi du tube de vidage (18).

3. Tube de vidage selon la revendication 1 ou 2, caractérisé en ce que la gouttière de décharge (30) peut pivoter a moyen d'au moins un moteur hydraulique (36) qui est raccordé en étant articulé à une extrémité à la gouttière de décharge (30) et, à l'autre extrémité, au tube de vidage (18) ou à la machine de récolte.

4. Tube de vidage selon une ou plusieurs des revendications précédentes, caractérisé en ce que la gouttière de décharge (30) est formée par un élément de paroi de section droite semi-circulaire (45) qui est relié par un élément de paroi (46) de longueur ou largeur variable à la paroi du tube de vidage (18).

5. Tube de vidage selon la revendication 4, caractérisé en ce que l'élément de paroi (45) de la gouttière de décharge (30) peut être élargi de telle façon qu'à l'état abaissé de la gouttière de décharge (30), l'élément de paroi rejoigne la paroi du tube de vidage (18).

6. Tube de vidage selon la revendication 4, caractérisé en ce que l'élément de paroi variable (46) comprend plusieurs panneaux (48) disposés en éventail, dirigés parallèlement entre eux, qui sont reliés à une extrémité par un axe d'articulation (50) de façon à pouvoir se déplacer avec le tube de vidage (18).

7. Tube de vidage selon la revendication 4, caractérisé en ce que l'élément de paroi (46) est formé entre le tube de vidage (18) et la gouttière de décharge pivotante (30) par une étoffe pliable.

8. Tube de vidage selon une ou plusieurs des revendications précédentes, caractérisé en ce que la gouttière de décharge (30) est formée par au moins deux segments de gouttière de décharge reliés entre eux de façon à être mobiles (51, 52), qui peuvent pivoter ensemble grâce à un premier moteur hydraulique (36), un second moteur hydraulique (53) étant raccordé aux deux segments de gouttière de décharge (51, 52), lequel déplace en plus le segment de gouttière de décharge extérieur ou second segment (52) placé à l'extrémité de décharge du premier segment de gouttière de décharge (51) par rapport au premier segment de gouttière de décharge (51) également déplaçable.

**Claims**

1. An evacuation pipe (18) which is connected to a storage container (16) of a harvester and which is provided between its connection to the storage container (16) and an outlet opening (24) at its end with at least one second outlet opening (28) and which can be closed by way of a pivotal member which in the position of closing the second outlet opening (28) completes the evacuation pipe to form a smooth or substantially smooth pipe, characterised in that the pivotal member is in the form of a discharge channel (30) and is pivotable downwardly about a substantially horizontal axis from its position of closing the second outlet opening (28).

2. An evacuation pipe according to claim 1 characterised in that the discharge channel (30) is pivotably mounted to the wall of the evacuation pipe (18) by means of at least one pivot pin (32).

3. An evacuation pipe according to claim 1 or claim 2 characterised in that the discharge channel (30) is pivotable by means of at least one hydraulic motor (36) which is pivotally connected at one end to the discharge channel (30) and at the other end to the evacuation pipe (18) or to the harvester.

4. An evacuation pipe according to one or more of the preceding claims characterised in that the discharge channel (30) is formed from a wall portion (45) which is of semicircular cross-section and which is connected to the wall of the evacuation pipe (18) by way of a wall portion (46) which is variable in respect of its length or width.

5. An evacuation pipe according to claim 4 characterised in that the wall portion (45) of the discharge channel (30) can be widened in such a way that in the lowered condition of the discharge channel (30) the wall portion reaches the wall of the evacuation pipe (18).

6. An evacuation pipe according to claim 4 characterised in that the variable wall portion (46) comprises a plurality of mutually parallel panels (48) which are arranged in a fan-like configuration and which are displaceably connected at on end to the evacuation pipe (18) by way of a pivot pin (50).

7. An evacuation pipe according to claim 4 characterised in that the wall portion (46) between the evacuation pipe (18) and the pivotable discharge channel (30) is formed from a foldable cloth.

8. An evacuation pipe according to one or more of the preceding claims characterised in that the discharge channel (30) is formed from at least two movably interconnected discharge channel segments (51, 52) which are jointly pivotable by way of a first hydraulic motor (36), wherein a second hydraulic motor (53) is connected to the two discharge channel segments (51, 52), and additionally displaces the outer or second discharge channel segment (52) arranged at the discharge end of the first discharge channel segment (51), relative to the first discharge channel segment (51) which is also displaceable.

# Fig. 1

# Fig. 4

Fig. 3

Fig. 2